# EUROPEAN PATENT SPECIFICATION

(11) **EP 2 347 893 B1**
(45) Date of publication and mention of the grant of the patent: **16.07.2014**
(21) Application number: 09826159.7
(22) Date of filing: 13.11.2009
(51) Int. Cl.: B29D 30/60, B29D 30/30

(54) **TIRE MANUFACTURING DEVICE AND TIRE MANUFACTURING METHOD**
REIFENHERSTELLUNGSVORRICHTUNG UND REIFENHERSTELLUNGSVERFAHREN
DISPOSITIF DE FABRICATION DE PNEU ET PROCÉDÉ DE FABRICATION DE PNEU

(30) Priority: 17.11.2008 JP 2008293562
(43) Date of publication of application: 27.07.2011
(73) Proprietor: Bridgestone Corporation, Tokyo 104-8340 (JP)
(72) Inventor: OGAWA, Yuichiro, Kodaira-shi Tokyo 187-8531 (JP)
(74) Representative: Waldren, Robin Michael
(86) International application number: PCT/JP2009/069358
(87) International publication number: WO 2010/055913

(56) References cited:
- EP-A1- 1 815 971
- JP-A- 2000 079 642
- JP-A- 2004 017 621
- JP-A- 2004 017 621
- JP-A- 2004 216 726
- JP-A- 2004 216 726
- JP-A- 2006 116 835

## Description

### Technical Field

The present invention relates to a tire manufacturing apparatus and a tire manufacturing method that forms an unvulcanized tire by stacking a rubber strip on a formed body by a pair of rotating rollers.

### Background Art

A pneumatic tire is generally manufactured by sequentially arranging each of tire constituent members made of unvulcanized rubber or the like on a formed body to thereby form an unvulcanized tire and by vulcanizing and molding the unvulcanized tire through the use of a tire vulcanizing machine. Furthermore, in manufacture of a tire, predetermined tire constituent members such as tread rubber are formed by attaching and stacking an unvulcanized rubber strip to a formed body by stacking means.

Meanwhile, in this type of tire manufacturing apparatus, generally, a pair of rollers provided in the stacking means is rotated and while a rubber strip is caused to pass through between their outer peripheral portions and to be rolled or the like, the rubber strip after passing is held by one of the rollers and is stacked on the formed body. At that time, the rubber strip having passed through between the rollers need to be reliably guided and held at one roller for stacking, but in a prior-art tire manufacturing apparatus, the tip of the rubber strip might be guided to the other roller depending on a close contact condition or the like between the roller and the rubber strip. As a result, the tip portion of the rubber strip cannot be stably held by the one roller as described above, and accuracy of arrangement and stacking of the rubber strip onto the formed body might be lowered.

In order to cope with the above, a tire manufacturing apparatus has been known in which the shapes of outer peripheral portions of a pair of rollers are formed as a convex curve and a concave curve having a curvature corresponding to each other, and the concave roller from which the rubber strip can be easily peeled off is used as a peeling-off side, while the convex roller is used as an attaching side of the rubber strip so that the tip of the rubber strip is guided to and held by the convex roller. Moreover, an attaching apparatus is also known in which a pair of rollers having a diameter different from each other are used, and a small-diameter roller from which the rubber strip is peeled off more easily is used as a peeling-off side, while a large-diameter roller as an attaching side so that the rubber strip is held by the large-diameter roller (See Patent Document 1).

However, with these prior-art apparatus, though each has its own advantage, a force to forcedly peel the rubber strip off each roller on the peeling-off side does not become sufficiently strong in some cases depending on the conditions such as a rubber type, and the advantage that the tip of the rubber strip is reliably peeled off the outer peripheral portion and guided to each roller on the attaching side might be insufficient, which requires further improvement. As a result, an operating rate of the apparatus might be lowered in accordance with modification of the rubber strip, which might lower productivity of tire manufacturing.

Furthermore, an apparatus has been known in which a plurality of through-holes are formed in an outer periphery of each roller, air is sucked from the through-hole of one of the rollers so as to adhere the rubber strip and also air is blown out from the through-hole of the other roller so as to peel off the rubber strip so that the tip of the rubber strip is guided to the one roller (See Patent Document 2).

However, in this prior-art apparatus, in addition to the formation of the through-holes in the rollers, mechanisms of sucking and blowing of air need to be provided and connected to the rollers, and thus the entire apparatus becomes complicated, which requires improvement. At the same time, since it is likely that rubber is clogged in the through-holes of the roller on the suction side and a failure of the apparatus increases, which needs further improvement.

### Citation List

### Patent Literature

Patent Document 1: Japanese Patent Laid-Open No. 2006-130757
Patent Document 2: Japanese Patent Laid-Open No. 2002-37492.

Attention is also drawn to the disclosures of JP 2004-216726 and EP 1,815,971.

### Summary of Invention

### Technical Problem

The present invention has been made in view of the above prior-art problems and has an object to reliably guide the tip of the rubber strip to one of the rollers and to hold the tip on the roller to thereby improve accuracy of arrangement and stacking of the rubber strip when the rubber strip is stacked by the pair of rollers to form an unvulcanized tire.

### Solution to Problem

The present invention is a tire manufacturing apparatus according to claim 1 provided with supply means of a rubber strip and stacking means that causes the supplied rubber strip to pass through between a pair of rotating rollers and stacks the rubber strip on a formed body by one of the rollers so that the rubber strip is stacked on the formed body and an unvulcanized tire is formed, characterized in having driving means that rotates each of the pair of rollers and speed changing means that makes a rotational peripheral speed of the one roller relatively slower than that of the other roller and guides a tip of the rubber strip to the one roller side when the tip of the rubber strip is supplied.

Furthermore, the present invention is a tire manufacturing method according to claim 2 in which the rubber strip is caused to pass through between the pair of rotating rollers and stacked on the formed body by the one roller so as to form an unvulcanized tire, including the steps of rotating the pair of rollers by making the rotational peripheral speed of the one roller relatively slower than the rotational peripheral speed of the other roller, supplying the rubber strip through between the pair of rotating rollers having a speed difference, and causing the tip of the supplied rubber strip to pass through between the pair of rollers and guiding the tip of the rubber strip to the one roller side.

### Advantageous Effects of Invention

According to the present invention, when an unvulcanized tire is formed by stacking a rubber strip by a pair of rollers, the tip of the rubber strip can be reliably guided to and held by one of the rollers for stacking, whereby accuracy of arrangement and stacking of the rubber strip can be improved.

### Brief Description of Drawings

[Fig. 1] Fig. 1 is an outline configuration diagram of a tire manufacturing apparatus of this embodiment.
[Fig. 2] Fig. 2 is a side view of an essential part illustrating a rubber strip passing through the rollers in an enlarged manner.

### Description of Embodiments

An embodiment of a tire manufacturing apparatus and a manufacturing method of the present invention will be described below with reference to the attached drawings.

The tire manufacturing apparatus of this embodiment is an apparatus that forms an unvulcanized tire by stacking a rubber strip on a formed body (a body to be formed) and forming rubber members of a tire component such as tread rubber, sidewall rubber and the like.

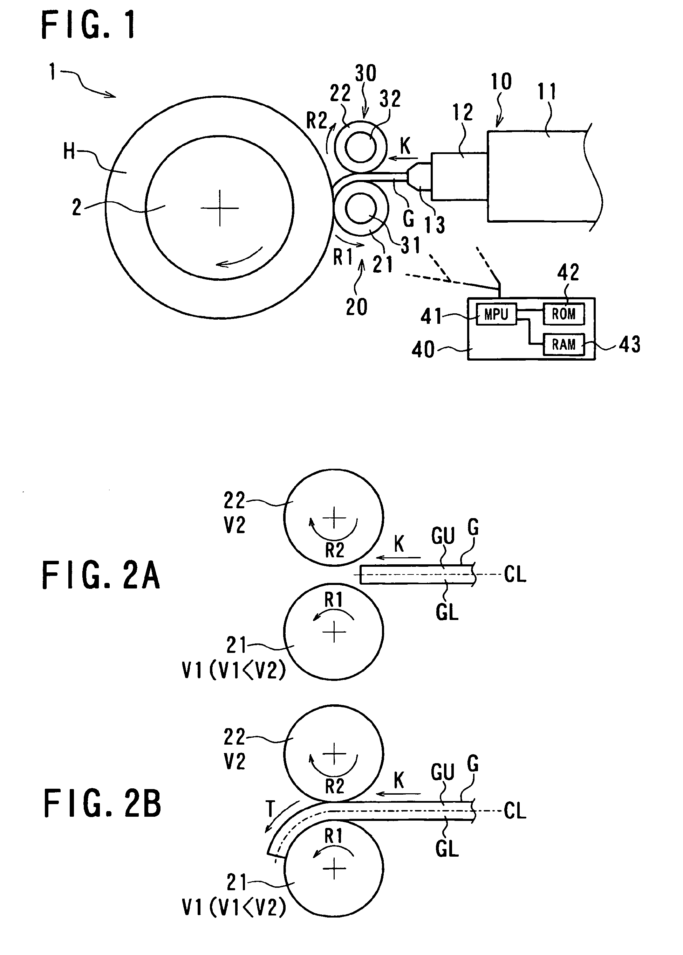

Fig. 1 is an outline configuration diagram of this tire manufacturing apparatus and schematically illustrates essential part of the apparatus in a side view or a block diagram.

A tire manufacturing apparatus 1 is, as shown in the figure, provided with a support (support body) 2, supply means 10 for a rubber strip G, stacking means 20 for the rubber strip G arranged therebetween, and a controller 40 that controls the entire apparatus.

The support 2 is support means that supports a formed body H rotatably around an axis during forming of an unvulcanized tire. For example, the support 2 is a rigid core having an outer shape in accordance with an inner shape of the unvulcanized tire to be formed, an expandable and contractible cylindrical forming drum or the like. Here, the support 2 is made of a rigid core rotatable around the axis. A tire constituent member and a rubber strip G are sequentially arranged, stacked or the like on the outer peripheral side of the support 2 so as to form the formed body H, and the support 2 holds the formed body H concentrically. Furthermore, this support 2 is provided with a rotation driving device (not shown) that has a driving source such as a motor and a transmission mechanism of the rotational power of the driving source. The support 2 is driven and rotated by the rotation driving device to thereby rotate the formed body H around the axis at a predetermined speed.

Here, the formed body H is an object on which the rubber strip G is to be stacked in forming of the unvulcanized tire and is any one of an unvulcanized tire in the middle of forming or a product in process or an intermediate formed body or the like arranged on the support 2. Alternatively, if the rubber strip G is to be directly stacked onto the support 2, the rigid core or the forming drum constitutes the formed body H. In contrast, the rubber strip G is a long rubber member to be formed in a ribbon shape, a band shape or the like and to be stacked, and is supplied from the supply means 10 toward the formed body H.

The supply means 10 has an extruder 11 (only the tip end side thereof is shown in the figure) that heats and kneads the unvulcanized rubber and extrudes it, an extrusion head 12 connected to a rubber extruding tip end of the extruder 11, and a die 13 mounted at a rubber discharge port of the extrusion head 12. The supply means 10 extrudes unvulcanized rubber by the extruder 11 from an opening portion of the die 13 via the extrusion head 12. The supply means 10 forms the rubber strip G in a predetermined sectional shape in accordance with the opening shape of the die 13 and continuously supplies the rubber strip G (an arrow K) toward the stacking means 20 at a predetermined speed. Furthermore, the supply means 10 has moving means (not shown) that moves the extruder 11 together with the stacking means 20 in the axial direction of the support 2 or the like along the outer surface of the support 2. Thereby, the extruder 11 is moved in accordance with the supply speed of the rubber strip G or a stacking position on the support 2 and the like, and the rubber strip G is supplied to a predetermined position of the rotating formed body H through the stacking means 20.

The stacking means 20 has a pair of rollers 21 and 22 supported rotatably around the axis and driving means 30 that rotates each of the roller 21 and 22. The stacking means 20 causes the supplied rubber strip G to pass through between the pair of rotating rollers 21 and 22 and stacks the rubber strip G on the formed body H by the one roller 21. Here, the rollers 21 and 22 have cylindrical or disk shapes formed with a predetermined diameter, respectively, in which the lower roller 21 is arranged by facing the vicinity of the outer surface of the support 2, while the upper roller 22 is arranged by facing with a predetermined gap between their outer peripheral portions. These rollers 21 and 22 are a stacking roller and a rolling roller of the rubber strip G, respectively, are supported in a state with the respective axes parallel with each other. The rubber strip G extruded from the die 13 is guided and continuously supplied to the rubber inlet of one side (right side in the figure) between the rollers 21 and 22.

The driving means 30 has a lower motor 31 and an upper motor 32 mounted on a rotary shaft (not shown) of each of the rollers 21 and 22. The driving means 30 separately drives and rotates the rollers 21 and 22 by each of the motors 31 and 32, respectively, so as to rotate them at each arranged position in a predetermined direction. Each of these motors 31 and 32 is constituted of rotary electric motor capable of changing a rotational speed (number of rotations per unit time: rotational number) independently of each other so as to rotate each of the rollers 21 and 22 at a predetermined rotational speed and to change each rotational speed independently. Thereby, the driving means 30 changes a peripheral speed of each of the rollers 21 and 22 on the respective outer peripheral portion in contact with the rubber strip G to a speed depending on the respective rotational speeds of the motors 31 and 32 and the respective diameters of the rollers 21 and 22. In the present invention, the peripheral speed on the surface of the outer peripheral portion of each of the rotating rollers 21 and 22 in contact with the rubber strip G is referred to as a rotational peripheral speed of the rollers 21 and 22.

In the stacking means 20, the rollers 21 and 22 are driven by the driving means 30 and rotated in opposite directions(arrows R1 and R2) in synchronization. The stacking means 20 rolls the supplied rubber strip G between the outer peripheral portions of the rollers 21 and 22, and forms the rubber strip G into a predetermined sectional shape having a thickness in correlation with the interval between the outer peripheral portions. Subsequently, the stacking means 20 guides the rubber strip G having passed through between the rollers 21 and 22 to one of the rollers (here, the lower roller 21) for stacking. The stacking means 20 holds the rubber strip G and moves it to a predetermined attaching position on the formed body H by the rotating lower roller 21, and presses and fixes the rubber strip G onto the outer surface of the formed body H that rotates in response to the rotation of the lower roller 21. As described above, the stacking means 20 attaches the rubber strip G to the formed body H such as an outer surface of the support 2, the rubber strip G in a lower-layer or an already arranged tire constituent member. The stacking means 30 continuously winds and stacks the rubber strip G helically in the tire circumferential direction and forms a rubber member such as a tread having a predetermined shape.

At that time, in this tire manufacturing apparatus 1, while the rubber strip G is continuously stacked, the rotational peripheral speeds of the both rollers 21 and 22 are set to speeds according to the rotational speed of the formed body H and maintained at the same speed, and the rubber strip G is caused to pass through the rollers 21 and 22. However, when the supply of the rubber strip G by the supply means 10 is started and the tip of the rubber strip G is to pass, the rotation speed of either one of or both of the motors 31 and 32 is changed and controlled to make the rotational peripheral speed of the lower roller 21 slower than the upper roller 22. That is, the rotational peripheral speed of the lower roller 21 is decreased or the rotational peripheral speed of the upper roller 22 is increased or these conditions are combined so that the rotational peripheral speed of the one lower roller 21 is relatively slower than that of the other upper roller 22. As described above, when the tip of the rubber strip G is supplied (when the stacking operation is started), a predetermined speed difference (speed ratio) is given to the rotational peripheral speeds of the rollers 21 and 22, the rubber strip G is caused to pass through between the rollers 21 and 22 in that condition and the guiding direction of the tip of the rubber strip G is controlled.

Fig. 2 is a side view of an essential part illustrating the rubber strip G passing through between the rollers 21 and 22 and schematically shows the rubber strip G and the rollers 21 and 22 at each stage. Furthermore, this figure virtually illustrates an upper rubber strip portion GU above a neutral plane CL in the thickness direction of the rubber strip G, and a lower rubber strip portion GL below the neutral plane CL.

In this embodiment, as shown in the figure, each of the rollers 21 and 22 is rotated in the opposite directions R1 and R2, in accordance with a supply direction K of the rubber strip G passing between the outer peripheral portions thereof. Furthermore, before the tip of the rubber strip G supplied from the supply means 10 reaches between the rollers 21 and 22 (See Fig. 2A), speeds V1 and V2 are adjusted so that the rotational peripheral speed V1 of the lower roller 21 for stacking is slower than the rotational peripheral speed V2 of the upper roller 22 (V1 < V2).

When the tip of the rubber strip G reaches between the rollers 21 and 22 in this condition, the tip of the rubber strip G having passed through between the rollers 21 and 22 is guided (arrow T) to the lower roller 21 side because of the difference in feeding amounts (conveyed amounts) of the rubber strip G by the rollers 21 and 22 that are in contact with the upper and lower surfaces of the rubber strip G. That is, in the rubber strip G, the surface of the upper rubber strip portion GU in contact with the upper roller 22 is fed more to the downstream side by the upper roller 22 whose rotational peripheral speed V2 is faster and the movement amount of the outer peripheral portion is larger. In contrast, the surface of the lower rubber strip portion GL is fed less to the downstream side by the lower roller 21 whose rotational peripheral speed V1 is slower and the movement amount of the outer peripheral portion is smaller. Because of the difference in the both feeding amounts, the rubber strip G having passed through between the rollers 21 and 22 is fed as a whole to the lower roller 21 side having smaller feeding amount. The rubber string G is subjected to a force in a direction separating from the upper roller 22 and is deformed so as to follow the outer peripheral portion of the lower roller 21. As a result, the tip of the rubber strip G is peeled off from the upper roller 22 and guided to the lower roller 21 side. The tip of the rubber strip G is held at the outer peripheral portion of the lower roller 21 and moved toward the formed body by the rotation of the lower roller 21.

Furthermore, here, the tip of the rubber strip G passes through between the pair of rollers 21 and 22, while the guiding direction of the rubber strip G is controlled as the above. Subsequently, when the tip of the rubber strip G is guided to the lower roller 21 side, the rotational peripheral speeds V1 and V2 of the pair of rollers 21 and 22 are changed to the same speed (V1 = V2). Specifically, the tip of the rubber strip G held by the lower roller 21 is detected by a sensor or the like, for example, and when guiding of the tip to the lower roller 21 side is confirmed, each of the rotational peripheral speeds V1 and V2 is changed. Alternatively, passage of the tip of the rubber strip G through between the pair of rollers 21 and 22 is detected by a sensor or a change of a torque acting on the motors 31 and 32, and when a predetermined time has elapsed from a point of this passage, each of the rotational peripheral speeds V1 and V2 is changed. Alternatively, the guiding of the tip of the rubber strip G is decided from an operating time of the extruder 11 (rubber extruded time), and when a predetermined time has elapsed from the start of the extrusion, on the assumption that the tip of the rubber strip G has been guided, each of the rotational peripheral speeds V1 and V2 may be changed. Thereby, a guiding error of the tip of the rubber strip G is prevented, the tip is reliably guided to the lower roller 21 side and held thereon, and after that, the speed is changed and the continuous stacking operation is performed. As described above, the tire manufacturing apparatus 1 gives a predetermined speed difference to the rotational peripheral speeds V1 and V2 of the rollers 21 and 22 only at the time when the tip of the rubber strip G is supplied, and after the tip has passed, the rollers 21 and 22 are rotated at the same rotational peripheral speeds V1 and V2.

Subsequently, by means of the tire manufacturing apparatus 1, a procedure and an operation of forming an unvulcanized tire and of manufacturing a tire will be described. The following procedures and the like are controlled by the controller 40 (See Fig. 1), and executed by apparatus components operated in conjunction. The apparatus components are operated in association with each other on the basis of the timing or conditions set in advance.

The controller 40 is constituted by a computer provided with a microprocessor (MPU) 41, a ROM (Read Only Memory) 42 that stores various programs, and a RAM (Random Access Memory) 43 that temporarily stores data to be directly accessed by the MPU 41 and the like. The apparatus components are connected to the controller 40 via connecting means. Thereby, the controller 40 transmits/receives a control signal and various data to/from the apparatus components, and causes the apparatus components to perform each of operations relating to tire forming, respectively. Furthermore, the controller 40 is connected to the motors 31 and 32 that drive and rotate the rollers 21 and 22, respectively, and changes the rotational speeds of the motors 31 and 32, respectively, by controlling the motors 31 and 32. Therefore, the controller 40 constitutes a part of speed changing means that changes the rotational peripheral speeds of the rollers 21 and 22 as above.

The tire manufacturing apparatus 1 rotates the pair of rollers 21 and 22 at the predetermined speeds, respectively, in a condition in which the rotational peripheral speed V1 (See Fig. 2) of the one lower roller 21 for stacking is made relatively slower than the rotational peripheral speed V2 of the other upper roller 22. Subsequently, the rubber strip G is supplied from the supply means 10 between the pair of rollers 21 and 22 rotating with the above speed difference. The tip of the supplied rubber strip G is caused to pass through between the pair of rollers 21 and 22 and is guided to the lower roller 21 side as above. The tip is held on the lower roller 21. Then, when the tip of the rubber strip G is guided to the lower roller 21 side after passing through between the pair of rollers 21 and 22, each of the rotational peripheral speeds V1 and V2 of the pair of rollers 21 and 22 is changed to the same speed. After that, the rollers 21 and 22 are maintained in the same condition, and the rubber strip G is continuously supplied. The rubber strip G is caused to pass through between the pair of rotating rollers 21 and 22 and held by the lower roller 21, and sequentially stacked on the formed body H (See Fig. 1). Thereby, the rubber member such as a tread and the like is formed on the formed body H, and the unvulcanized tire having a predetermined shape and structure is formed. A product tire is manufactured by vulcanizing and molding the unvulcanized tire.

As described above, in this embodiment, in a conodition in which the rotational peripheral speed V1 of the lower roller 21 is made relatively slower than the rotational peripheral speed V2 of the upper roller 22, the rubber strip G is supplied and caused to pass through between the rotating rollers 21 and 22. At that time, by the above-described action realized by the difference in the feeding amounts of the rubber strip G fed by the rollers 21 and 22, the guiding direction of the tip of the rubber strip G is accurately controlled and can be reliably guided to the desired lower roller 21 side. Furthermore, the tip of the rubber strip G is forcedly peeled off the upper roller 22 with a strong force, reliably guided to the lower roller 21 and stably held on the outer peripheral portion thereof. Then the rubber strip G can be accurately moved and supplied to the stacking position to the formed body H. As a result, accuracy of arrangement and stacking of the rubber strip G on the formed body H can be improved. Also, reliability and operation rate of the apparatus, and productivity of the tire manufacturing can be improved.

Therefore, according to this embodiment, when the rubber strip G is stacked by the pair of rollers 21 and 22 to thereby form the unvulcanized tire, the tip of the rubber strip G can be reliably guided to the one lower roller 21 for stacking and held thereon, and accuracy of arrangement and stacking of the rubber strip G can be improved. Furthermore, in this tire manufacturing apparatus 1, since the rotational peripheral speeds of the rollers 21 and 22 are changed to the same speed after the tip of the rubber strip G is guided, while the rubber strip G is reliably held by the lower roller 21, it is able to prevent a fall of accuracy in a stacked condition caused by the occurrence of deformation such as a wrinkle or meandering of the rubber strip G due to the speed difference of the rollers 21 and 22. Moreover, since each of the above-described advantageous effects can be obtained only by changing the rotational peripheral speeds of the rollers 21 and 22, the apparatus does not become complicated but can be produced with a low cost, and occurrence of a trouble with the apparatus can be suppressed.

Here, the driving means 30 may be configured with one motor in an alternative to the two motors 31 and 32. For example, one motor is connected to each of the rollers 21 and 22 via a speed shift mechanism having a speed reducing unit, a clutch and the like. By the speed shift mechanism, the rotational peripheral speeds are shifted and changed at predetermined timing before and after the tip of the rubber strip G passing through between the rollers 21 and 22 while the rollers 21 and 22 are rotated. As described above, the driving means 30 that rotates the rollers 21 and 22 and the speed changing means can use various known means that rotates the rollers 21 and 22 at predetermined speeds and that can adjust the speed difference and the like of the rollers 21 and 22.

It should be noted that in this embodiment, the lower roller 21 is used as a roller for stacking the rubber strip G, but depending on the method of stacking the rubber strip G in layers, the upper roller 22 may be used as a roller for stacking and the tip of the rubber strip G may be guided to the upper roller 22 side similarly to the above. Furthermore, the rollers 21 and 22 may be formed so as to have the same diameter or different diameters, or may be formed having different outer peripheral shapes corresponding to each other.

### Reference Signs List

1: tire manufacturing apparatus, 2: support, 10: supply means, 11: extruder, 12: extrusion head, 13: die, 20: stacking means, 21: lower roller, 22: upper roller, 30: driving means, 31: lower motor, 32: upper motor, 40: controller, 41: MPU, 42: ROM, 43: RAM, H: formed body, G: rubber strip

## Claims

1. A tire manufacturing apparatus (1) provided with supply means (10) of a rubber strip (G) and stacking means that causes the supplied rubber strip to pass through between a pair of rotating rollers (21, 22) and stacks the rubber strip on a formed body (H) by one of the rollers so that the rubber strip is stacked on the formed body and an unvulcanized tire is formed, comprising:
driving means (30) that rotates each of the pair of rollers; and
speed changing means (40) that makes a rotational peripheral speed of the one roller relatively slower than the rotational peripheral speed of the other roller and guides a tip of the rubber strip to the one roller side when the tip of the rubber strip is supplied, **characterised in that**:
the speed changing means has means that changes the rotational peripheral speeds of the pair of rollers to the same speed when the tip of the rubber strip is guided to the one roller side.

2. A tire manufacturing method in which a rubber strip (G) is caused to pass through between a pair of rotating rollers (21, 22) and stacked on a formed body (H) by one of the rollers so as to form an unvulcanized tire, comprising the steps of:
rotating the pair of rollers by making a rotational peripheral speed of the one roller relatively slower than the rotational peripheral speed of the other roller;
supplying the rubber strip between the pair of rotating rollers having a speed difference; and
causing a tip of the supplied rubber strip to pass through between the pair of rollers and guiding the tip of the rubber strip to the one roller side, **characterised by**:
changing the rotational peripheral speeds of the pair of rollers to the same speed when the tip of the rubber strip is guided to the one roller side.

## Patentansprüche

1. Reifenherstellungsvorrichtung (1), die mit einem Zuführungsmittel (10) eines Kautschukstreifens (G) und einem Stapelmittel, die veranlasst, dass der zugeführte Kautschukstreifen zwischen einem Paar von sich drehenden Walzen (21, 22) hindurchgeht, und den Kautschukstreifen durch eine der Walzen auf einen geformten Korpus (H) stapelt, so dass der Kautschukstreifen auf den geformten Korpus gestapelt wird und ein nicht-vulkanisierter Reifen geformt wird, wobei die Vorrichtung Folgendes umfasst:
ein Antriebsmittel (30), das jede von dem Paar von Walzen dreht, und,
ein Geschwindigkeitsänderungsmittel (40), das eine Umfangsdrehgeschwindigkeit der einen Walze verhältnismäßig langsamer macht als die Umfangsdrehgeschwindigkeit der anderen Walze und eine Spitze des Kautschukstreifens zu der einen Walzenseite führt, wenn die Spitze des Kautschukstreifens zugeführt wird, **dadurch gekennzeichnet dass**:
das Geschwindigkeitsänderungsmittel ein Mittel hat, welches die Umfangsdrehgeschwindigkeiten des Paares von Walzen auf die gleiche Geschwindigkeit ändert, wenn die Spitze des Kautschukstreifens zu der einen Walzenseite geführt wird.

2. Reifenherstellungsverfahren, bei dem veranlasst wird, dass ein Kautschukstreifen zwischen einem Paar von sich drehenden Walzen (21, 22) hindurchgeht und durch eine der Walzen auf einen geformten Korpus (H) gestapelt wird, um so einen nichtvulkanisierten Reifen zu formen, wobei das Verfahren die folgenden Schritte umfasst:
das Drehen des Paares von Walzen dadurch, dass eine Umfangsdrehgeschwindigkeit der einen Walze verhältnismäßig langsamer gemacht wird als die Umfangsdrehgeschwindigkeit der anderen Walze,
das Zuführen des Kautschukstreifens zwischen dem Paar von sich drehenden Walzen, die einen Geschwindigkeitsunterschied haben, und
das Veranlassen, dass eine Spitze des zugeführten Kautschukstreifens zwischen dem Paar von Walzen hindurchgeht, und das Führen der Spitze des Kautschukstreifens zu der einen Walzenseite, **gekennzeichnet durch**:
das Ändern der Umfangsdrehgeschwindigkeiten des Paares von Walzen auf die gleiche Geschwindigkeit, wenn die Spitze des Kautschukstreifens zu der einen Walzenseite geführt wird.

## Revendications

1. Dispositif (1) de fabrication de pneu pourvu d'un moyen d'alimentation (10) d'une bande de caoutchouc (G) et d'un moyen d'empilage qui fait passer la bande de caoutchouc à travers une paire de rouleaux rotatifs (21, 22) et empile la bande de caoutchouc sur un corps moulé (H) grâce à l'un des rouleaux, de sorte que la bande de caoutchouc est empilée sur le corps moulé et un pneu non vulcanisé est formé, le dispositif comprenant:
un moyen d'entraînement (30) qui fait tourner chaque rouleau de la paire de rouleaux; et
un moyen variateur de vitesse (40) au moyen duquel la vitesse périphérique de rotation de l'un rouleau est réduite par rapport à la vitesse périphérique de rotation de l'autre rouleau et guide une extrémité de la bande de caoutchouc du côté de l'un rouleau lors de l'alimentation de l'extrémité de la bande de caoutchouc, **caractérisé par le fait que**:
le moyen variateur de vitesse comprend un moyen qui modifie les vitesses périphériques de rotation de la paire de rouleaux pour que ceux-ci aient la même vitesse lorsque l'extrémité de la bande de caoutchouc est guidée du côté de l'un rouleau.

2. Procédé de fabrication de pneu dans lequel on fait passer une bande de caoutchouc (G) à travers une paire de rouleaux rotatifs (21, 22) et on l'empile sur un corps moulé (H) grâce à l'un des rouleaux de manière à former un pneu non vulcanisé, comprenant les étapes consistant à:
faire tourner la paire de rouleaux en faisant en sorte que la vitesse périphérique de rotation de l'un rouleau soit réduite par rapport à la vitesse périphérique de rotation de l'autre rouleau;
alimenter la bande de caoutchouc entre la paire de rouleaux rotatifs qui présentent une différence de vitesse; et
faire passer une extrémité de la bande de caoutchouc alimentée à travers la paire de rouleaux et guider l'extrémité de la bande de caoutchouc du côté de l'un rouleau, **caractérisé par**:
une modification des vitesses périphériques de rotation de la paire de rouleaux pour que ceux-ci aient la même vitesse lorsque l'extrémité de la bande caoutchouc est guidée du côté de l'un rouleau.
